# EUROPEAN PATENT APPLICATION

(11) **EP 1 258 625 A2**
(43) Date of publication of application: **20.11.2002**
(21) Application number: 02253452.3
(22) Date of filing: 15.05.2002
(51) Int. Cl.: F02M 37/00

(54) **A fuel tank neck seal arrangement**

(30) Priority: 18.05.2001 GB 0112257
(71) Applicant: Visteon Global Technologies, Inc., Dearborn, Michigan 48126-2490 (US)
(72) Inventor: Jones, William George, Hockley, Essex SS5 5HN (GB)
(74) Representative: McLean, Robert Andreas

(57) **Abstract**

A fuel tank has a neck 26 into which a flange 32 of a level sender unit 24 is to be sealed. A seal gasket 40 surrounds the neck and is received between converging seal surfaces 42 and 44, one on the neck and the other on the flange, and the outside of the neck. A flange nut 34 is provided to clamp the flange to the neck, thus compressing the gasket between the seal surfaces to effect a seal.

## Description

This invention relates to a fuel tank neck seal arrangement in which a gasket is used to provide a seal effective to seal a fuel tank against the escape of gasoline molecules from the tank.

Many new vehicles feature the use of blow-moulded plastic fuel tanks for a variety of reasons. The primary reason is often to maximise the volume of fuel that a vehicle may carry. The plastic tank enables this by virtue of the fact that it may be moulded into shapes that steel tanks may not be capable of, therefore effectively increasing the storage capacity of the same vehicle when compared to a steel tank.

However, simple plastic fuel tanks bring with them other problems, primarily to do with emissions as molecules of gasoline are able to percolate through the polymeric structure of the material used for blow moulded fuel tanks (eg: high density polyethylene - HDPE).

Fuel tank manufacturers have developed methods of minimising this percolation process. One method is to convert the inside skin of the tank by a chemical process called fluorination and another method is to 'co-extrude' another material with the HDPE such that a barrier is set up rather like an onion skin inside the main material of the tank wall (this barrier layer being a type of nylon).

Once emissions from the main tank structure have been minimised, there still remains the problem of minimising emissions from the elastomeric seals that are used on some of the connections to the tank.

One of the seals is that used on the so-called 'level sender flange'.

This flange is used to close an aperture in the fuel tank where the fuel level sender and the vehicle's electric fuel pump are assembled into the fuel tank.

Many configurations of gasket have been seen in use to seal this opening, and many have deficiencies associated with, for example: manufacturing, product assembly and cost.

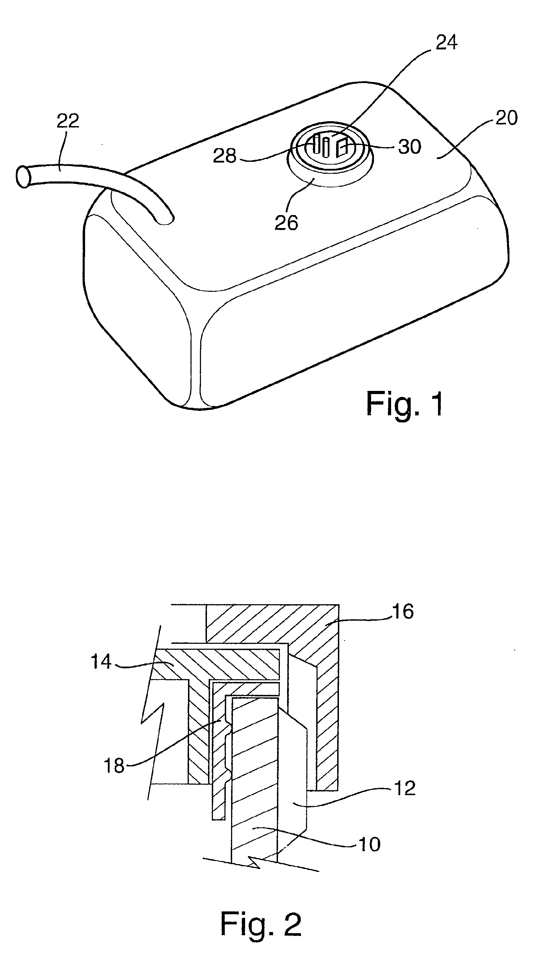

Figure 2 shows a typical flange-to-tank neck sealing arrangement such as found in many existing European vehicles. The Figure shows a tank neck 10 with an external thread 12, a level sender edge flange 14 and a flange retaining nut 16. A gasket 18 is fitted between the neck 10 and the flange 14. The gasket has a significant influence on the variability of the nut tightening torque and applied load during assembly, and also influences the ease with which the assembly may be serviced.

The proposed solution identifies a simple gasket arrangement that utilises a minimum of material, a low cost material, an improved initial assembly condition and an improved service condition. The gasket or seal method also affords an improvement to vehicle hydrocarbon emissions.

According to the invention, there is provided a fuel tank neck seal arrangement in which a level sender flange is to be sealed against the neck, the arrangement comprising a seal gasket surrounding the neck and received between converging seal surfaces, one on the neck and the other on the flange, with separate means being provided to clamp the flange to the neck, thus compressing the gasket between the seal surfaces to effect a seal.

The seal surface on the neck is preferably moulded integrally with the tank, and the seal surface on the flange is preferably integral with the flange. The flange may be of metal or plastic.

The converging seal surfaces can approach one another at a variety of different angles. Preferably both surfaces converge with each other at the same angle. Preferably the included angle between the surfaces is in the range between 5° and 25°. However any angle greater than 0° could be used.

The seal gasket preferably has a D-shaped cross-section, and the flat part of the D-shaped cross-section will then fit against the neck between the converging seal surfaces. The seal gasket will be constrained on three sides but may be unconstrained on a fourth side.

The seal gasket will be made of an elastomeric material which is impervious to gasoline molecules. Suitable materials will be well known to those skilled in the art.

The flange can be clamped to the neck by a threaded nut which engages with an external thread on the neck. The external thread on the neck can be below the converging seal surface on the neck, so that the nut covers and protects the seal gasket.

The invention will now be further described, by way of example, with reference to the accompanying drawings, in which:
Figure 1 shows schematically a motor vehicle fuel tank;
Figure 2 is a section through a flange-to-neck joint in a prior art fuel tank;
Figures 3 and 4 show a section through a flange-to-neck joint in accordance with the invention, in loose and tightened positions; and
Figure 5 shows the joint of Figure 4 in additional detail.

Figure 1 shows a conventional moulded plastics fuel tank with an irregular shape 20, and a fuel filler neck 22. The tank also has a level sender unit 24 installed through a neck 26 on the top surface. The sender unit 24 may be combined with fuel flow connections 28, and will have a socket 30 for connection of electrical cables through which a fuel level signal can be sent to the driver's instrumentation.

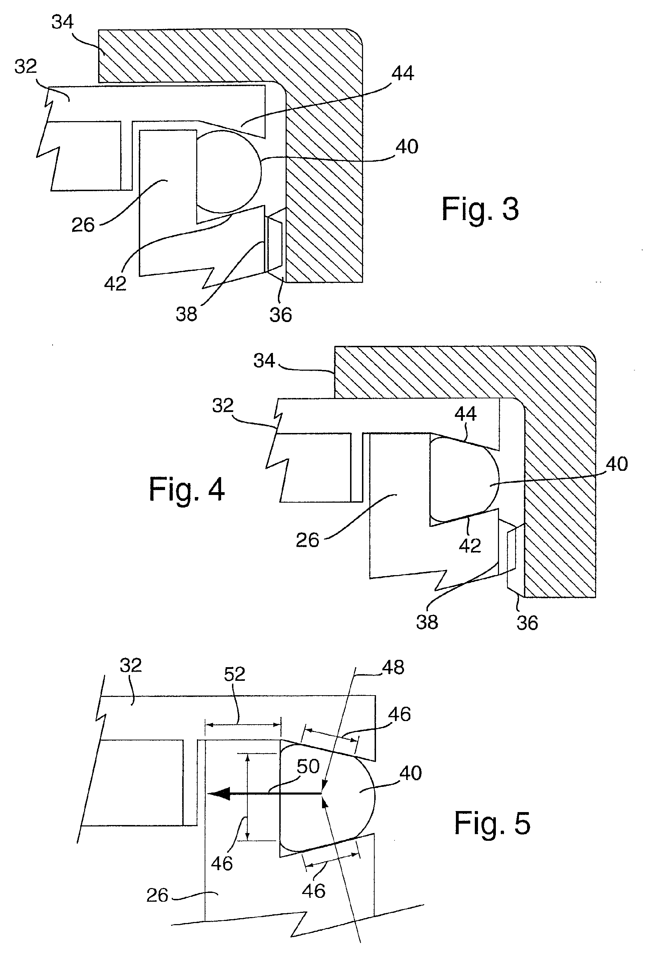

Figure 3 shows a section through the neck 26 and a flange 32 of the sender unit 24. A flange nut 34 has an internal thread at 36 which screws onto an external thread 38 of the neck 26. An annular seal ring 40 surrounds the neck 26 and is received between an upwardly sloping rib 42 on the neck, and a downwardly sloping outer portion 44 of the flange 32.

The seal ring 40 is D-shaped in cross-section, and the flat portion of the seal ring circumference lies against the outer wall of the neck 26.

When the flange nut 34 is tightened, (see Figure 4) the seal ring 40 is compressed between the outer wall of the neck 26, the rib 42 and the flange outer portion 44, to complete a seal between the interior and the exterior of the tank.

The seal ring or gasket 40 is in a contained seating when fully compressed.

The contained seating is constructed from an outer diameter on the neck of the fuel tank's sender aperture opening and two inclined faces, one face adjoins the outer diameter and the other face is constructed on the flange used to close the fuel sender opening.

The 'D' section gasket 40 assembles over an outside diameter of the fuel tank neck 26 onto which it is a transition fit such that the tank may be reasonably handled during assembly without the seal simply falling off.

The 'D' section seal is seated onto a face which forms an angle of somewhat less than 90° with the outside diameter mentioned above.

The fuel level sender flange 32, which closes the aperture in the fuel tank, also has an angled face, again of somewhat less than 90°, on its underside, where the 'D' section seal comes into contact with it.

When the flange retaining nut 34 is driven down the thread on the fuel tank opening neck, the two angled faces (one on the neck, the other on the flange) contact the seal and the force vectors generated load the elastomer gasket inward toward the tank neck, deforming the seal to tend to fill the trapezium-shaped containment volume created by the tank neck and the level sender flange.

Thus, the flange retaining nut, when driven home, abuts a combination of solid features (flange plus tank neck) and the drive torque required to complete the assembly suffers from far less variability than in systems where the elastomeric seal forms a component of the abutment of the flange nut assembly.

Also, since the seal is housed in a containment volume of relatively precise proportions (when compared to other seals) and capable of close dimensional control, the seal is compressed by a known amount which suffers from minimal variability, allowing better choice of material type and sectional area, also bringing cost advantages.

Service use is also benefited as any swelling of the seal which may take place due to exposure to hydrocarbons is minimised due to the very small contact available with the hydrocarbon via the mating face gap between the level sender flange and the tank neck upper face. Once swelling is minimised, no radical change in flange nut torque will be experienced. This is not the case where the gasket forms a component of the abutment of the flange nut assembly.

Figure 5 shows the solid abutment area, which also serves to limit liquid fuel exposure to the elastomeric seal, and the load vectors used to contain the 'D' section seal. The regions indicated at 46 represent the sealing surfaces; the arrows 48 represent the load vectors on the gasket; the heavy arrow 50 represents the gasket load onto the tank neck 26, and the distance 52 represents the abutment of the flange 32 to the tank neck 26. This abutment prevents overstressing of the gasket.

This gasket/seal method may contribute to the emissions performance of the total vehicle in PZEV (Partial Zero Emissions Vehicle), ZEV (Zero Emissions Vehicle) and LEV (Low Emissions Vehicle) applications.

Although this disclosure has been aimed at the use of this method of sealing in conjunction with blow-moulded plastic fuel tanks, the method could equally well be utilised with steel fuel tanks having a typical 'cam lock' method of retention for the fuel level sensor /fuel pump closing flange.

## Claims

1. A fuel tank neck seal arrangement in which a level sender flange is to be sealed against the neck, the arrangement comprising a seal gasket surrounding the neck and received between converging seal surfaces, one on the neck and the other on the flange, with separate means being provided to clamp the flange to the neck, thus compressing the gasket between the seal surfaces to effect a seal.

2. An arrangement as claimed in Claim 1, wherein the seal surface on the neck is moulded integrally with the tank.

3. An arrangement as claimed in Claim 1 or Claim 2, wherein the seal surface on the flange is integral with the flange.

4. An arrangement as claimed in any preceding claim, wherein the seal surfaces have an included angle of between 5° and 25°.

5. An arrangement as claimed in any preceding claim, wherein the seal gasket has a D-shaped cross-section.

6. An arrangement as claimed in Claim 5, wherein the flat part of the D-shaped cross-section fits against the neck between the converging seal surfaces.

7. An arrangement as claimed in any preceding claim, wherein the seal gasket is constrained on three sides but unconstrained on a fourth side.

8. An arrangement as claimed in any preceding claim, wherein the clamping means comprises a threaded nut which engages with an external thread on the neck.

9. An arrangement as claimed in Claim 8, wherein the external thread on the neck is below the converging seal surface on the neck.
